# EUROPÄISCHE PATENTANMELDUNG

(11) **EP 1 681 183 A2**
(43) Veröffentlichungstag der Anmeldung: **19.07.2006**
(21) Anmeldenummer: 06000369.6
(22) Anmeldetag: 10.01.2006
(51) Int. Cl.: B60G 17/02, B60G 15/06, F16F 15/02

(54) **Federträger mit verstellbarem Federteller**

(30) Priorität: 14.01.2005 DE 102005001743
(71) Anmelder: ZF FRIEDRICHSHAFEN AG, 88046 Friedrichshafen (DE)
(72) Erfinder: Münster, Martin, 88271 Wilhelmsdorf (DE); Mair, Ulrich, 88046 Friedrichshafen (DE); Baasch, Detlef, 88048 Friedrichshafen (DE)

(57) **Zusammenfassung**

Federträger, umfassend einen Drehantrieb mit einem Stator und einem Rotor, der mittels einer Gewindemutter-Gewindespindel-Anordnung einen Federteller für eine Feder axial in seiner Position verstellen kann, wobei koaxial zum Drehantrieb ein Schwingungsdämpfer, der eine Kolbenstange und einen Zylinder aufweist, angeordnet ist, wobei der Rotor fest mit der Gewindespindel verbunden ist und die Gewindespindel einen größeren Innendurchmesser aufweist als der Zylinder, so dass der Zylinder in die Gewindespindel einfedern kann.

## Beschreibung

Die Erfindung betrifft einen Federträger gemäß dem Oberbegriff von Patentanspruch 1.

Aus der DE 101 01 694 C1 ist ein Federträger bekannt, der zwei Federteller aufweist, zwischen denen eine Feder verspannt ist. Ein erster Federteller kann mittels eines Drehantriebs in der Bauform eines E-Motors axial in seiner Position verstellt werden. Dazu verfügt der Federträger über eine Gewindespindel und eine Gewindemutter. Die Gewindemutter ist innenseitig an einem Rotor des Drehantriebs befestigt und treibt über die Gewindespindel an, die einteilig mit dem ersten Federteller ausgeführt ist. Koaxial innerhalb der Gewindespindel verläuft die Feder, die deshalb nur einen sehr begrenzten Außendurchmesser aufweisen kann.

Die gattungsbildende DE 102 55 764 B3 beschreibt einen Federträger, umfassend einen Drehantrieb mit einem Stator und einem Rotor, der mittels einer Gewindemutter-Gewindespindel-Anordnung einen Federteller für eine Feder axial in seiner Position verstellen kann, wobei der Rotor fest mit der Gewindespindel verbunden ist und koaxial zum Drehantrieb ein Schwingungsdämpfer, der eine Kolbenstange und einen Zylinder aufweist, angeordnet ist.

Aufgabe der vorliegenden Aufgabe ist es, einen Federträger mit einem möglichst großen Verstellbereich für den Federteller zu realisieren, wobei ein maximales Federvolumen für die Feder nutzbar sein soll.

Erfindungsgemäß wird die Aufgabe durch die Merkmale von Patentanspruch 1 gelöst.

Die Gewindespindel kann vergleichsweise lang ausgeführt sein und einen großen Verstellbereich für den verstellbaren Federteller bieten. Mit dem längeren Verstellbereich ergibt sich eine größere Auswahl der verwendbaren Federabmessungen.

In weiterer vorteilhafter Ausgestaltung ist die Gewindespindel auf einem ortsfest zum Stator befindlichen Führungsrohr gelagert. Auch bei einer vergleichsweise langen Gewindespindel kann eine sehr gute radiale Abstützung der Gewindespindel/Gewindemutter gewährleistet werden, so dass keine Verspannungen zwischen der Gewindespindel und der Gewindemutter auftreten.

Des weiteren ist vorgesehen, dass die Feder radial außerhalb der Gewindespindel angeordnet ist. Im genannten Stand der Technik verbleibt für die Feder nur das kleine Federvolumen radial innerhalb der Gewindespindel. Mit der erfindungsgemäßen Ausgestaltung können deutlich stärkere Federn eingesetzt werden. Um insgesamt einfache Bauteile, insbesondere für den Federteller einsetzen zu können, weist die Gewindespindel auf ihrem Außendurchmesser ein Bewegungsgewinde für die Gewindemutter mit dem verstellbaren Federteller auf.

Zusätzlich zu der Feder kann eine zweite Feder verwendet werden, deren Innendurchmesser größer ist als der Stator. Eine der Federn übernimmt z. B. die statische Grundlast, z. B. des Viertelfahrzeugs und die zweite Feder stützt die dynamischen Stützkräfte ab.

Anhand der folgenden Figurenbeschreibung soll die Erfindung näher erläutert werden.

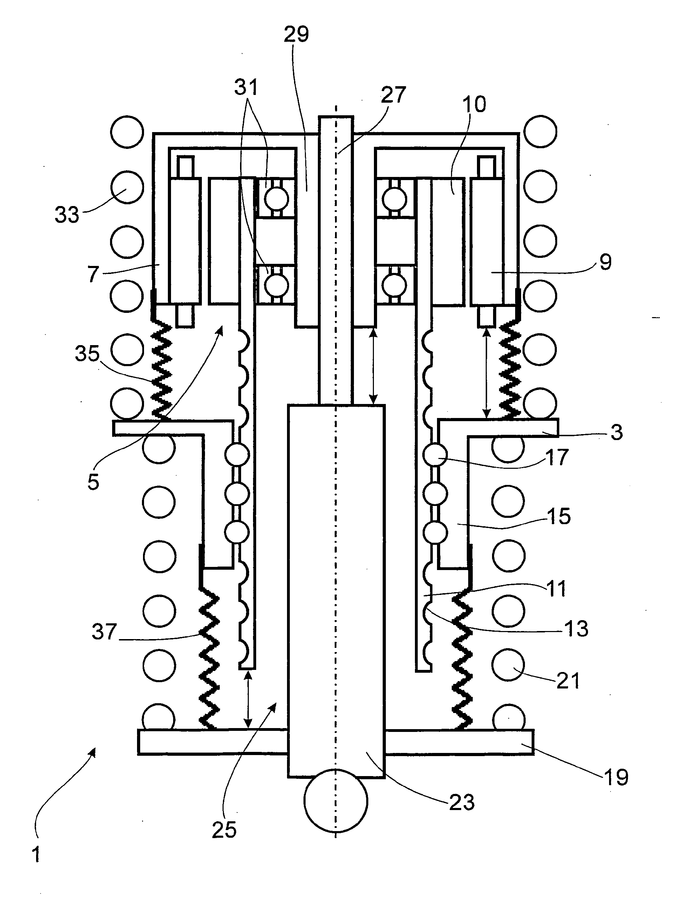

Die einzige Figur zeigt eine Prinzipskizze eines Federträgers 1, wie er z. B. zwischen einem Fahrzeugaufbau und einem Achsteil zur Anwendung kommen kann. Der Federträger umfasst einen ersten Federteller 3, der in seiner axialen Position verstellbar ist. Dafür verfügt der Federträger über einen Drehantrieb 5 z. B. in der Ausgestaltung eines E-Motors. In einem Gehäuse 7, das mit dem besagten Fahrzeugaufbau verbunden ist, befindet sich ein Stator 9, der einen Rotor 10 antreibt. Der Rotor ist wiederum fest mit einer Gewindespindel 11 verbunden, die auf ihrem Außendurchmesser ein Bewegungsgewinde 13 aufweist, in das eine Gewindemutter 15, die mit dem verstellbare Federteller 3 verbunden ist, ggf. unter Verwendung von Kugeln 17 eingreift. Eine Drehbewegung des Rotors wird von der GewindespindelGewindemutter in eine axiale Verstellbewegung des Federtellers 3 umgesetzt.

Zwischen dem verstellbaren Federteller 3 und einem zweiten Federteller 19 ist eine Feder 21 verspannt. Der zweite Federteller ist ortsfest zu einem Zylinder 23 eines Schwingungsdämpfers 25 angeordnet, der koaxial zum Drehantrieb 5 positioniert ist. In dem Zylinder kann eine Kolbenstange 27 eine axiale Verschiebebewegung ausführen. Der Aufbau eines konventionellen Schwingungsdämpfers wird als bekannt vorausgesetzt. Beispielhaft wird auf die DE 37 32 978 A1 verwiesen.

Die Gewindespindel weist einen größeren Innendurchmesser auf als der Zylinder, so dass der Zylinder innerhalb der Gewindespindel endet. Am anderen Ende ist die Gewindespindel auf einem ortsfest zum Stator 9 befindlichen Führungsrohr 29 mittels Lager 31 gelagert. Durch das Führungsrohr verläuft die Kolbenstange 27 des Schwingungsdämpfers 25.

In diesem Ausführungsbeispiel kommt neben der Feder 21, die radial außerhalb der Gewindespindel 11 angeordnet ist, noch eine zweite Feder 33 zur Anwendung. Die zweite Feder verfügt über einen Innendurchmesser, der größer ist als der Außendurchmesser des Stators 9 und kann sich direkt an dem Fahrzeugaufbau oder z. B. an einem Federteller als Teil des Gehäuses 7 abstützen. Zwischen dem Gehäuse 7 und dem verstellbaren Federteller, sowie weitergehend zum zweiten Federteller 19 kann ein axial elastischer Schutzbalg 35; 37 verwendet werden. Für die beiden Federn 21; 33 steht ein sehr großer radialer aber auch axialer Bauraum zur Verfügung.

## Patentansprüche

1. Federträger, umfassend einen Drehantrieb mit einem Stator und einem Rotor, der mittels einer Gewindemutter-Gewindespindel-Anordnung einen Federteller für eine Feder axial in seiner Position verstellen kann, wobei der Rotor fest mit der Gewindespindel verbunden ist und koaxial zum Drehantrieb ein Schwingungsdämpfer, der eine Kolbenstange und einen Zylinder aufweist, angeordnet ist,
**dadurch gekennzeichnet,**
**dass** die Gewindespindel (11) einen größeren Innendurchmesser aufweist als der Zylinder (23), so dass der Zylinder (23) in die Gewindespindel (11) einfedern kann.

2. Federträger nach Anspruch 1,
**dadurch gekennzeichnet,**
**dass** die Gewindespindel (11) auf einem ortsfest zum Stator (9) befindlichen Führungsrohr (29) gelagert ist.

3. Federträger nach Anspruch 1,
**dadurch gekennzeichnet,**
**dass** die Gewindespindel (11) auf ihrem Außendurchmesser ein Bewegungsgewinde (13) für die Gewindemutter (15) mit dem verstellbaren Federteller (3) aufweist.

4. Federträger nach Anspruch 1,
**dadurch gekennzeichnet,**
**dass** zusätzlich zu der Feder (21) eine zweite Feder (33) verwendet wird, deren Innendurchmesser größer ist als der Stator (9).

5. Federträger nach Anspruch 1,
**dadurch gekennzeichnet,**
**dass** die erste Feder (21) radial außerhalb der Gewindespindel (11) angeordnet ist.
